(19) Europäisches Patentamt
European Patent Office
Office européen des brevets

(11) Publication number: 0 008 916
A1

(12) EUROPEAN PATENT APPLICATION

(21) Application number: 79301744.3

(22) Date of filing: 24.08.79

(51) Int. Cl.$^3$: C 08 J 11/00
C 08 L 21/00, B 29 H 19/00

(30) Priority: 29.08.78 GR 57710

(43) Date of publication of application:
19.03.80 Bulletin 80/6

(84) Designated Contracting States:
BE CH DE FR GB IT LU NL SE

(71) Applicant: SIXTH WAKOOL PTY. LTD.
282 Rathmines Street
Thornbury, 3071 Victoria(AU)

(72) Inventor: Baroutsis, Stanley
15 Bernice Avenue
Underwood Queensland(AU)

(74) Representative: Eyles, Christopher Thomas et al,
BATCHELLOR, KIRK & EYLES 2 Pear Tree Court
Farringdon Road
London, EC1R 0DS(GB)

(54) **Compositions for treating used rubber and their use in a recycling process.**

(57) Used rubber is treated for recycling by placing it in a mixture containing one or more optionally substituted benzenes (e.g. toluene or xylene) until it is brittle, followed preferably by removal from the mixture and pulverizing it. The mixture can contain also one or more $C_4$ to $C_{10}$ alkanes or alkenes and/or optionally substituted pyrrolidones. Preferred inclusive ranges by weight are: optionally substituted benzenes 40 - 80%, alkanes or alkenes 1 - 20%, and optionally substituted pyrrolidones 0 - 40%. A typical composition for use in the treatment is, by weight, 88% toluene, 6% xylene, 3% methylpyrrolidone and 3% *iso*-octane.

EP 0 008 916 A1

## RUBBER RECYCLING

This invention relates to the treatment of rubber for the purpose of recycling. In one aspect this invention relates to a method of treating rubber and in another aspect the invention relates to a composition which can be used for treating rubber.

The present invention provides a method of treating used rubber for the purpose of recycling which comprises forming a mixture comprising at least one compound of the general formula I:

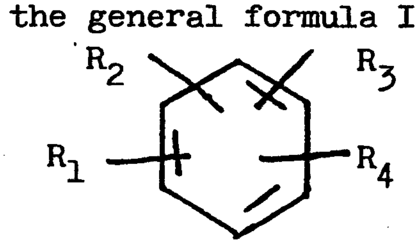

(I)

wherein $R_1$, $R_2$, $R_3$ and $R_4$, which may be the same or different, are selected from the group consisting of methyl, ethyl, n-propyl, iso-propyl, chlorine, bromine and hydrogen and placing said used rubber in said mixture until it becomes brittle. Subsequently the method may include removing said rubber from said mixture and pulverizing same into a powder form.

The at least one compound of formula I is preferably present in said composition as 40-80% inclusive by weight thereof.

Said composition may additionally contain one or more aliphatic compounds, preferably of sage form, and preferably of formula II:

$$C_n H_{2n+x} \qquad \text{(II)}$$

where n is an integer of from 4 to 10 inclusive and x is an integer of from -2 to +2 inclusive and including zero.

The compound of formula II may be of straight chain or branched chain form.

The one or more compound of formula II is preferably present as from 1 to 20% inclusive of said composition.

Particularly preferred are compositions which contain aliphatic (sage) compound, methyl, dimethyl, trimethyl or tetramethyl or benzolia or tetramethyl benzene and normal or iso alkanes or normal or iso alkenes containing from 5 to 10 carbon atoms inclusive. Said composition may include at least one compound of formula III:

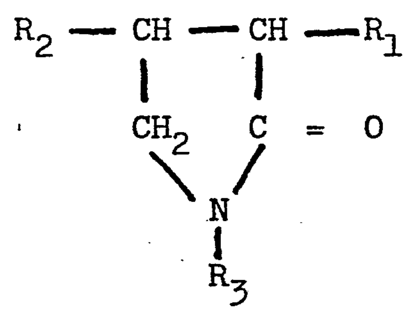

(III)

wherein $R_1$, $R_2$ and $R_3$, which may be the same or different, are selected from the group consisting of hydrogen, methyl, $-CH_2Hal$ or $-C_2H_3$.

Said at least one compound of formula III is preferably present in said composition as from 0-40% by weight thereof.

Exemplary compositions in accordance with this invention will now be described with reference to the following Examples in which all percentages are by weight:-

Example I

88% alkylbenzol with (e.g. SHELLSOL E ($C_7$ $H_8$))

6% xylene

3% methylpyrrolidone

3% iso-octane 1,2,3,4, trimethyl pentane

Example II

88% toluene

6% xylene

3% iso-octane 1,2,3,4, trimethylpentane

Example III

88% xylene

1-3% iso-octane

Example IV

100% xylene

The composition may be applied to natural or synthetic rubbers including nitrile rubbers.

The composition is effective in forming mixtures from which material can be obtained which can be reformed into rubber for further use and without wishing to be limited by any theory we believe that the composition breaks molecular bonds in rubber molecules. In practice, a powder can be obtained which is capable of being processed and re-used as rubber.

The compositions are effective in treating rubber which might otherwise be thought to be waste. In this respect the compositions have been effective in treating worn out motor car tyres to the extent of even recovering rubber adhering to wire beads and linen casings.

Example V

A composition was prepared in accordance with this invention, for example that of Example I, and waste tyres were steeped therein. The liquid obtained was withdrawn and linen of the casing and wire of the beads of the tyres were removed. Thereafter the tyre could be ground down to a powder which can be reprocessed as rubber.

In all the aforementioned Examples the effect was to produce a brittle rubber substance from the original used rubber, which substance could readily be ground or pulverized to provide a powder. The length of time in the composition depended upon the thickness and type of rubber and it should be noted that after removal from the composition conversion of the rubber substance to powder should be effected within a limited time, otherwise the rubber substance returns to its original untreated state. The time limit for conversion to powder also depends on the thickness and type of rubber as well as on ambient temperature conditions.

As examples of compounds of formula (I) there can be mentioned benzene, toluene, o-, m- and p- xylenes,

ethylbenzene, cumene, chlorobenzene, o- and p-dichlorobenzenes, bromobenzene, hemimellitene, durene, pseudocumene, mesitylene, and the like, and mixtures of two or more thereof.

As examples of compounds of formula (II) there can be mentioned n-pentane, iso-octane, n-heptane, n-hexane, 2-methylpentane, 2-methylhexane, 3-ethylpentane, hexene-1, heptene-1, and the like, and mixtures of two or more thereof including light petroleum fractions of suitable boiling point.

In Examples I, II and III alternative forms of iso-octane are 2-methylheptane and 2,2,4-trimethylpentane.

As examples of compounds of formula (III) there can be mentioned N-methylpyrrolidone, 3- and 5-methylpyrrolid-2-ones, 1,3,5-trimethylpyrrolid-2-one, N-chloromethylpyrrolidone, 3- and 5-chloromethylpyrrolid-2-ones, N-vinylpyrrolidone, and the like.

In Example I the methylpyrrolidone may be N-methylpyrrolidone; alternatives are 3- or 5-methylpyrrolid-2-one.

The claims form part of the disclosure of this specification.

Modifications and adaptions may be made to the above described without departing from the spirit and scope of this invention which includes every novel feature and combination of features disclosed herein.

0008916

CLAIMS

1. A method of treating used rubber for the purpose of recycling which comprises forming a mixture comprising at least one compound of the general formula I:

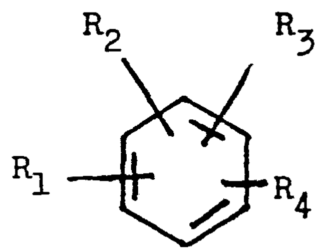

(I)

wherein $R_1$, $R_2$, $R_3$ and $R_4$, which may be the same or different, are selected from the group consisting of methyl, ethyl, n-propyl, iso-propyl, chlorine, bromine and hydrogen and placing said used rubber in said mixture until it becomes brittle.

2. A method as claimed in claim 1, wherein the compound of formula I is present in said composition as 40-80% by weight.

3. A method as claimed in claim 1 or claim 2, wherein said composition additionally contains one or more compounds of formula II:

$$C_n H_{2n + x} \qquad (II)$$

where n is an integer of from 4 to 10 inclusive and x is an integer of from -2 to +2 inclusive and including zero.

4. A method as claimed in claim 3, wherein the one or more compound of formula II is present as 1-20% of said composition.

5. A method as claimed in any preceding claim, wherein said composition additionally contains at least one compound of formula III:

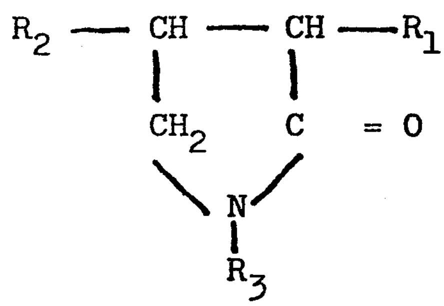

(III)

wherein $R_1$, $R_2$ and $R_3$ which may be the same or different, are selected from the group consisting of hydrogen, methyl, $-CH_2$ Hal or $-C_2H_3$.

6. A method as claimed in claim 5, wherein said at least one compound of formula III is present in said composition as 0-40% thereof.

7. A method as claimed in any preceding claim, including evaporating said composition to obtain a rubber derivative capable of being reprocessed as rubber.

8. A composition comprising 40 - 80% of a method of at least one compound of the general formula I:

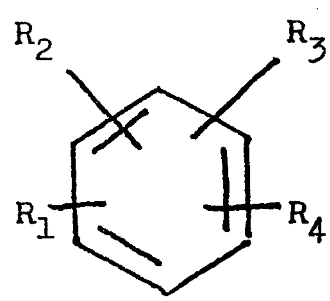

(I)

wherein $R_1$, $R_2$, $R_3$ and $R_4$, which may be the same or different, are selected from the group consisting of methyl, ethyl, n-propyl, iso-propyl, chlorine, bromine and hydrogen, 1-20% of at least one compound of formula II:

$$C_n H_{2n+x} \qquad \text{(II)}$$

where n is an integer of from 4 to 10 inclusive and x is an integer of from -2 to +2 inclusive and including zero and 0-40% of at least one compound of formula III:

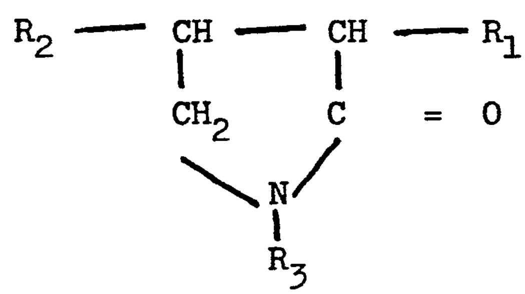

(III)

where $R_1$, $R_2$ and $R_3$, which may be the same or different, are selected from the group consisting of hydrogen, methyl, $-CH_2$ Hal or $-C_2H_3$.

9. A method as defined in claim 1 wherein said rubber is removed from said mixture and pulverized into a powder form.

10. A method of treating rubber substantially as hereinbefore described.

11. A composition substantially as hereinbefore described.

European Patent Office

# EUROPEAN SEARCH REPORT

0008916

Application number

EP 79 30 1744

## DOCUMENTS CONSIDERED TO BE RELEVANT

| Category | Citation of document with indication, where appropriate, of relevant passages | Relevant to claim |
|---|---|---|
| X | GB - A - 16 116 A.D. 1914 (HENRY DE BAUGE)<br>* Claims 1,6; page 2, lines 1-6; page 2, lines 15-35; page 3, lines 21-29 and 34-41 * | 1,2,7, 9-11 |
| | -- | |
| | GB - A - 505 156 (PIRELLI)<br>* Claims 1,6; page 2, lines 38-47; page 3, lines 29-45 * | 1,3,7, 9-11 |
| | -- | |
| | BE - A - 424 704 (A. BRAY)<br>* Entire document * | 1,3 |
| | -- | |
| P | FR - A - 2 387 261 (J.G. DOBOZY et al. )<br>* Claims 1-3,8-10,16; page 2, lines 10-15; page 3, line 24 * | 1-4,7, 9-11 |
| | -- | |
| | CHEMICAL ABSTRACTS, vol. 40, no. 9, May 10, 1946, column 2671.3<br>Columbus, Ohio, USA<br>K.S. ROSTLER et al. "Swelling of rubber. I. A study of reclaiming oils with regard to swelling action on GR-S and natural rubber".<br>& Rubber Age 58, 585-90 (1946)<br>* Whole abstract * | 1,3 |
| | -- | |
| | US - A - 4 052 344 (G. CRANE et al. ) | 1,3 |
| | | ./. |

**CLASSIFICATION OF THE APPLICATION (Int. Cl. 3)**

C 08 J 11/00
C 08 L 21/00
B 29 H 19/00

**TECHNICAL FIELDS SEARCHED (Int.Cl. 3)**

C 08 J 11/00
11/04
B 29 H 19/00
19/04
19/06
C 08 L 21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 06-12-1979 | HALLEMEESCH |

EPO Form 1503.1 06.78

European Patent Office

# EUROPEAN SEARCH REPORT

0008916
Application number

EP 79 30 1744

-2-

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | * Claim 1; column 3, lines 35-47 *<br>---- | | |
| | | | TECHNICAL FIELDS SEARCHED (Int. Cl. 3) |

EPO Form 1503.2 06.78